Europäisches Patentamt

European Patent Office

Office européen des brevets

(11) Veröffentlichungsnummer: **0 271 637 B1**

(12) **EUROPÄISCHE PATENTSCHRIFT**

(45) Veröffentlichungstag der Patentschrift: **18.03.92**

(21) Anmeldenummer: **87112141.4**

(22) Anmeldetag: **21.08.87**

(51) Int. Cl.⁵: **G01P 1/02**, G01D 11/24, H01F 5/04, G01D 5/20

(54) **Induktivgeber.**

(30) Priorität: **15.12.86 DE 3642770**

(43) Veröffentlichungstag der Anmeldung:
**22.06.88 Patentblatt 88/25**

(45) Bekanntmachung des Hinweises auf die
Patenterteilung:
**18.03.92 Patentblatt 92/12**

(84) Benannte Vertragsstaaten:
**DE ES FR GB IT SE**

(56) Entgegenhaltungen:
**EP-A- 0 003 838**   **EP-A- 0 149 217**
**EP-A- 0 194 213**   **DE-A- 2 154 847**
**DE-U- 7 038 855**   **FR-A- 2 172 993**
**US-A- 3 998 298**

**IBM TECHNICAL DISCLOSURE BULLETIN,
Band 19, Nr. 7, Dezember 1976, Seite 2414,
IBM Corp., New York, US; D.P. DARWIN:
"Attachment of coil leads to bobbins"**

(73) Patentinhaber: **ALFRED TEVES GMBH
Guerickestrasse 7
W-6000 Frankturt/Main 90(DE)**

(72) Erfinder: **Goll, Manfred
Duedelsheimer Weg 2
W-6475 Glauburg 2(DE)**
Erfinder: **Wehner, Erkenbert
Praunheimer Landstrasse 220
W-6000 Frankturt am Main 90(DE)**

EP 0 271 637 B1

## Beschreibung

Die Erfindung betrifft einen Induktivgeber, bestehend aus einem eine Bohrung aufweisenden, aus Kunststoff im Spritzgußverfahren hergestellten Gehäuse, zwei Polschuhen, und einem dazwischen angeordneten Permanentmagneten, wobei Polschuhe und Permanentmagnet mit Kunststoff umspritzt sind, sowie einem in der Bohrung eingesetzten, aus Kunststoff hergestellten Spulenkörper mit einer darauf aufgewickelten Spule, die mittels Lotösen an zwei mit einem nach außen geführten Kabel verbundene Kontaktfahnen angeschlossen ist, sowie einem Befestigungsteil, wobei die Bohrung an ihrem den Lotösen zugewandten Ende mittels eines mit dem Gehäuse verschweißten Deckels dicht verschlossen ist, sowie ein Verfahren zu seiner Herstellung.

Ein Induktivgeber mit den obigen Merkmalen ist der DE-OS 34 00 870 zu entnehmen. Bei dem bekannten Induktivgeber ist eine Mündung einer durch das Gehäuse hindurchgehenden Öffnung mittels eines an einem topfförmigen Spulenträger ausgebildeten Flansches dicht verschlossen, der mit dem Gehäuse verschweißt ist, wobei die Polschuhe mit dem Dauermagneten in einer Ausnehmung des Spulenträgers angeordnet sind.

Weniger vorteilhaft anzusehen sind beim bekannten Induktivgeber die Korrosionsprobleme im Polschuhbereich, die durch die aus dem Gehäuse herausragenden Enden der Polschuhe verursacht werden. Ein Vermeiden derartiger Probleme kann durch Verwendung von hochwertigen Materialien zur Herstellung der Polschuhe erreicht werden, die jedoch mit großem finaziellem Aufwand verbunden ist. Da sich an den herausragenden Polschuhenden Metallpartikel bzw. Späne formschlüssig ansetzen können, besteht die Gefahr einer Kurzschlußbildung bzw. einer Änderung des Induktivgeber-Ausgangssignals. Nachteilig wirken auch die toleranzbehafteten Fügestellen auf die funktionswichtigen Maße der Polschuhe. Als kritisch empfunden wird auch die Dichtheit des bekannten Induktivgebers, insbesondere im Polschuhbereich, die ebenfalls auf mehrere Dicht- bzw. Fügestellen zurückzuführen ist, die zudem auch eine erhöhte Beschädigungsgefahr durch wechselnde Temperatur- und Schlagbeanspruchung mit sich bringen. Nachteilig ist schließlich auch die Notwendigkeit, für verschiedene Geberausführungen unterschiedliche Spulenkörper mit Polschuhen und den dazugehörenden Permanentmagneten vorzusehen, die sich auf die Herstellungskosten der bekannten Induktivgeber negativ auswirken.

Aus der europäischen Patentanmeldung 0 194 213 ist ein elektromagnetischer Sensor bekannt, dessen Gehäuse zweiteilig ausgebildet ist, wobei das erste, eine Magnetspule mit einem einzigen Polschuh aufnehmende, rohrförmige Teil mit dem Werkstoff des anderen Kabelanschlußteiles umspritzt ist. Die Magnetspule und der Polschuh sind auf bzw. in einem Spulenkörper aufgenommen, der sich am Boden des ersten Gehäuseteiles abstützt und mit einem Schutzmantel versehen ist.

Ein anderer induktiver Impulsgeber ist in der europäischen Patentanmeldung 0 003 838 beschrieben. Zur Lenkung des Magnetflusses finden rückschließende Elemente für das Magnetfeld Verwendung, die einerseits durch einen sich an einem als Permanentmagnet vorgesehenen Ferritkern abstützenden Mittelsteg einer Befestigungslasche und andererseits durch ein außerhalb einer Spule angeordnetes Rückschlußelement gebildet sind. Der Ferritkern ist innerhalb eines die Spulenwicklung tragenden Spulenkörpers angeordnet, während das zylindrisch gestaltete Rückschlußelement die Spule von außen umgreift, so daß am sensierten Punkt eine große Magnetflußstreuung stattfindet.

Der vorliegenden Erfindung liegt daher die Aufgabe zugrunde, einen Induktivgeber der eingangs genannten Art anzugeben, der unter Umgehung vorgenannter Nachteile fertigungstechnisch einfacher herzustellen ist und eine wesentliche Funktionsverbesserung mit sich bringt.

Diese Aufgabe wird erfindungsgemäß dadurch gelöst, daß der Boden, das Gehäuse und zwei Stützwände insgesamt einteilig ausgebildet sind, daß die Polschuhe mit dem Permanentmagneten zwischen den Stützwänden angeordnet und mit dem Kunststoff des Gehäuses umspritzt sind und daß die Polschuhe im Boden enden.

Durch den erfindungsgemäßen Aufbau des Induktivgebers werden die nachfolgend aufgezählten Vorteile erzielt:

a) Möglichkeit eines Baukastensystems, bei dem nur eine Montagegruppe (Gehäuse) alle auslegungsvariablen Einzelteile für verschiedene Gebervarianten aufnimmt;

b) weniger kritische Dichtstellen; absolute Dichtheit bodenseitig;

c) verbesserter Schutz von äußeren Beschädigungen auch im Zusammenhang mit starkem Temperaturwechsel;

d) alle funktionswichtigen Maße werden in einem Arbeitsgang und in nur einer Bau- oder Montagegruppe zueinander direkt festgelegt;

e) wenige, für verschiedene Varianten gleiche Baugruppen (Spulenkörper).

Eine vorteilhafte Weiterbildung des Erfindungsgegenstandes sieht vor, daß der Abstand der Polschuhenden von der Oberfläche des Bodens mindestens 0,2 mm beträgt. Da die Polschuhe nicht mehr aus dem Gehäuse heraustreten, wird eine erhebliche Verbesserung der Funktionssicherheit sowie eine Materialkostenersparnis im Hinblick auf die mögliche Verwendung preisgünstiger Polschuhmaterialien erreicht. Außerdem können aufgrund dieser Maßnahmen keine Korrosionsprobleme an den funktionswichtigen Teilen auftreten.

Die mit der Herstellung des Spulenkörpers verbundenen Kosten können dadurch erheblich reduziert werden, daß die Lotösen halbkreisförmig ausgebildet sind und rohrförmige Ansätze aufweisen, die in entsprechende Ausnehmungen im Spulenkörper eingepreßt sind.

Eine kleinere Ausführung des Induktivgeberkopfes und eine Vereinfachung des Gehäuse-Spritzwerkzeugs werden dadurch ermöglicht, daß das eine Auflagefläche des Induktivgebers bildende Befestigungsteil vom Gehäuse-Kunststoff teilweise umspritzt ist.

Schließlich wird eine zusätzliche Positionssicherung des montierten Spulenkörpers bzw. Abdichtung der Lotösen und Kontaktfahnen dadurch erreicht, daß zwischen der die Lotösen tragenden Stirnseite des Spulenkörpers und dem Deckel eine Dämpfungs- bzw. Dichtmasse, vorzugsweise eine silikonhaltige Masse, angebracht ist.

Ein Verfahren zur Herstellung des Induktivgebers nach der Erfindung ist in den Ansprüchen 7 und 8 angegeben.

Die Erfindung wird nachfolgend anhand eines Ausführungsbeispiels in Verbindung mit der beiligenden Zeichnung näher erläutert, wobei die einander entsprechenden Einzelteile mit den gleichen Bezugszeichen versehen sind.

Es zeigt:

Fig. 1 einen Querschnitt eines Induktivgebers nach der Erfindung entlang der Linie X-X nach Fig- 2;

Fig. 2 eine Draufsicht des Induktivgebers nach Fig. 1, teilweise im Schnitt, ohne Deckel und

Fig. 3 eine schematische Darstellung der einzelnen Schritte des Verfahrens zur Herstellung des Induktivgebers nach Fig. 1.

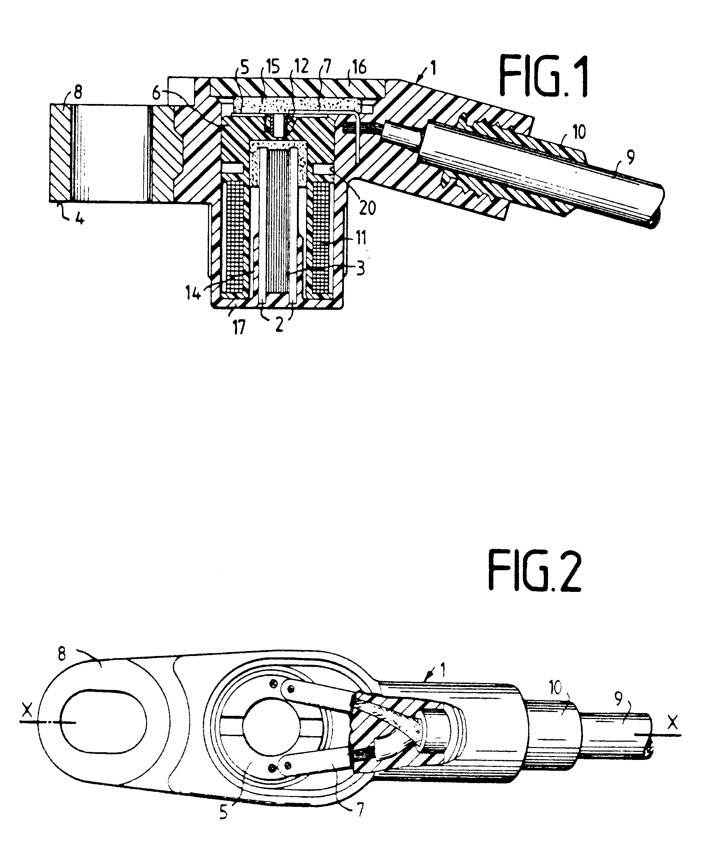

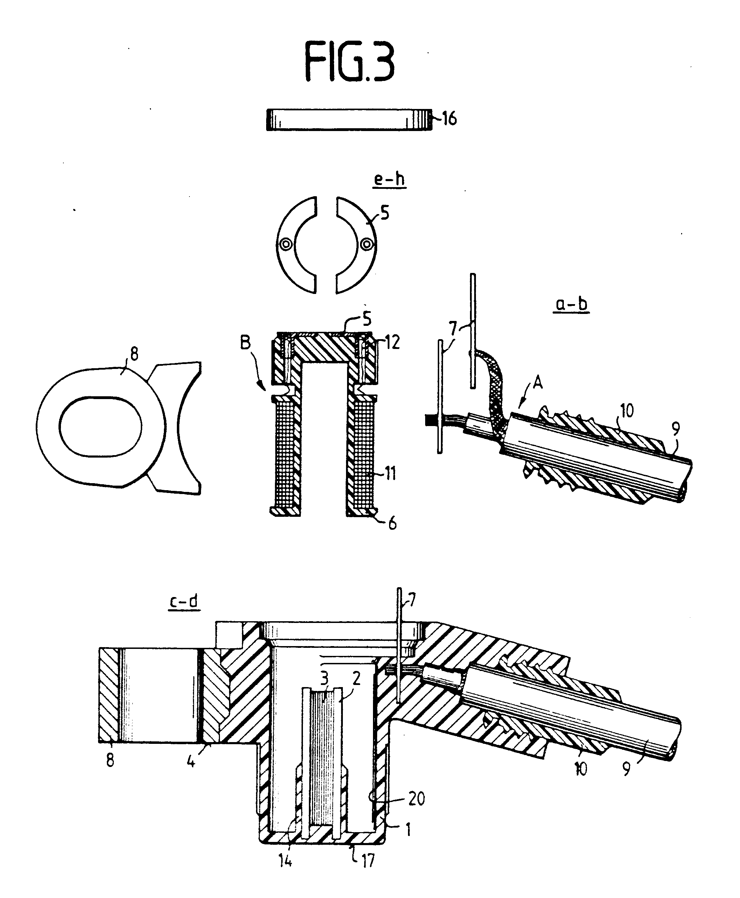

Der in Figuren 1, 2 und 3 dargestellte Induktivgeber weist ein im Spritzgußverfahren aus einem geeigneten Kunststoff hergestelltes Gehäuse 1 auf, das mit einer durchgehenden Bohrung 20 versehen ist, die durch einen einteilig mit dem Gehäuse 1 ausgebildeten Boden 17 dicht verschlossen ist. Auf der in der Darstellung rechten Seite ist das Gehäuse 1 mit einem durch eine mit dem Gehäusekunststoff umspritzte Tülle 10 hindurchgeführten, kunststoffummantelten Kabel 9 versehen, das vorzugsweise entweder als zweiadriges oder einadrig - abgeschirmtes Kabel ausgeführt werden kann. Die abisolierten Enden des Kabels 9 sind mit zwei formgleichen, ebenfalls im Kunststoff eingegossenen Kontaktfahnen 7 durch Löten verbunden.

Mit Gehäusekunststoff umgossen sind auch zwei um die Längsachse der Bohrung 20 symmetrisch angeordnete Polschuhe 2 mit einem dazwischen liegenden Permanentmagneten 3, deren bodenseitige Enden im Boden 17 enden. Um dem Paket "Magnet mit Polschuhen" nach der Erfindung eine bessere Formstabilität zu verleihen, sind mindestens zwei mit dem Boden 17 einstückig ausgebildete Stützwände 14 vorgesehen, die an den außenliegenden Flächen der beiden Polschuhe 2 anliegen.

Auf der in der Darstellung linken Seite weist das Gehäuse 1 ein mit Kunststoff nur teilweise umspritztes Befestigungsteil 8 auf, dessen untere Fläche eine Auflagefläche 4 des Induktivgebers bildet, deren axialer Abstand von der Ebene der Polschuhenden ein wichtiges Funktionsmaß darstellt.

Die Bohrung 20 nimmt außer den beiden Polschuhen 2 mit dem Permanentmagneten 3 noch einen ebenfalls aus Kunststoff gespritzten Spulenkörper 6 auf, dessen Durchmesser etwa dem der Bohrung 20 entspricht und der mit seiner zentralen Ausnehmung die Polschuhe 2 mit dem Permanentmagneten 3 umschließt. Eine auf dem Spulenkörper 6 aufgewickelte Spule 11 ist mit ihren Enden an zwei halbkreisförmigen Lotösen 5 angeschlossen, die mit rohrförmigen Ansätzen 12 in entsprechende Ausnehmungen im Spulenkörper 6 eingepreßt und mit den entsprechend umgebogenen Kontaktfahnen 7 verlötet sind. Die Bohrung 20 ist von oben schließlich durch einen Deckel 16 verschlossen, wobei der zwischen der die Lotösen 5 tragenden Stirnseite des Spulenkörpers 6 und dem Deckel 16 entstandene Raum mit einer Dämpfungs- bzw. Dichtmasse 15 gefüllt werden kann.

Wie der obigen Beschreibung zu entnehmen ist, besteht der Induktivgeber nach der Erfindung aus zwei Haupt-Montagegruppen, wobei die erste Montagegruppe durch das voll aus Kunststoff gespritzte, unten geschlossene Gehäuse 1 gebildet wird, in dem alle auslegungsbedingten Teile als Einlegeteile untergebracht sind. Da die zweite Montagegruppe lediglich durch den für sämtliche Ausführungsformen einheitlichen, universell einsetzbaren Spulenkörper 6 mit der darauf aufgewickelten Spule 11 und den beiden Lotösen 5 gebildet wird, erfolgt die Montage sowohl der beiden oben erwähnten Gruppen als auch die Endmontage des Induktivgebers durch nur wenige Fertigungsschritte, die im einzelnen nachfolgend näher erläutert werden:

An das abisolierte Ende des Kabels 9 wird zunächst die für die Abdichtung des Induktivgebers erforderliche Tülle 10 aus Kunststoff angespritzt sowie die für beide Leiter (bzw. Leiter und Abschirmung) formgleichen Kontaktfahnen 7 angelötet. Die so gebildete erste Baugruppe A wird dann zusammen mit den Polschuhen 2, dem dazwischen angeordneten Permanentmagneten 3 sowie dem Befestigungteil 8 in ein nicht dargestelltes Gehäuse-Spritzwerkzeug derart eingelegt, daß damit ein genauer Abstand der Polschuhe 2 zueinander bzw. zur Auflagefläche 4 des Induktivgebers eingestellt wird.

Dadurch sind nach dem Abspritzen des Gehäuses 1 mit den sich darin befindlichen, oben erwähnten Einlegeteilen A, 2,3 und 8 alle wichtigen Funktionsmaße des Induktivgebers zueinander festgelegt.

Nach dem Abspritzen des ebenso aus Kunststoff bestehenden Spulenkörpers 6 in einem nicht dargestellten Spulenkörper-Spritzwerkzeug wird darauf die Spule 11 aufgewickelt, deren verdrillte Enden in die rohrförmigen Ansätze 12 der vorher in den Spulenkörper 6 eingepreßten Lotösen 5 eingeführt und mit denen verlötet werden.

Bei der Endmontage wird nun der komplette, eine zweite Baugruppe B bildende Spulenkörper 6 in die Bohrung 20 des Gehäuses 1 eingeführt, wobei dessen seitliche Verdrehsicherung von den die Polschuhe 2 haltenden Stützwänden 14 bzw. der geschlossenen Ausnehmung 18 des Bodens 17 übernommen werden kann. Die spezielle Form der Lotösen 5 ermöglicht eine Verwendung des gleichen Spulenkörpers 6 in einem Polschuhlagebereich bis annähernd 180° zur Längsachse X-X des Induktivgebers. Danach werden die Kontaktfahnen 7 in Richtung der Lotösen 5 umgebogen und mit den Lotösen 5 durch Löten verbunden. Nach Aufbringen einer eine zusätzliche Lagesicherung des Spulenkörpers 6 sowie eine Abdeckung der Lotstellen bewirkenden Dämpfungs- bzw. Dichtmasse 15, vorzugsweise einer Silikonmasse, wird der aus Kunststoff hergestellte Deckel 16 eingesetzt und mit dem Gehäuse 1 verschweißt.

Aufstellung der verwendeten Bezugszeichen.

| 1 | Gehäuse |
| 2 | Polschuhe |
| 3 | Permanentmagnet |
| 4 | Auflagefläche |
| 5 | Lotösen |
| 6 | Spulenkörper |
| 7 | Kontaktfahnen |
| 8 | Befestigungsteil |
| 9 | Kabel |
| 10 | Kabeltülle |
| 11 | Spule |
| 12 | Absatz |
| 13 | - |
| 14 | Stützwand |
| 15 | Dichtmasse |
| 16 | Deckel |
| 17 | Boden |
| 18 | - |
| 19 | - |
| 20 | Bohrung |
| A | erste Baugruppe |
| B | zweite Baugruppe |

**Patentansprüche**

1. Induktivgeber, bestehend aus einem eine Bohrung (20) aufweisenden, aus Kunststoff im Spritzgußverfahren hergestellten Gehäuse (1), zwei Polschuhen (2), und einem dazwischen angeordneten Permanentmagneten (3), wobei Polschuhe (2) und Permanentmagnet (3) mit Kunststoff umspritzt sind, sowie einem in der Bohrung (20) eingesetzten, aus Kunststoff hergestellten Spulenkörper (6) mit einer darauf aufgewickelten Spule (11), die mittels Lotösen (5) an zwei mit einem nach außen geführten Kabel (9) verbundene Kontaktfahnen (7) angeschlossen ist, sowie einem Befestigungsteil (8), wobei die Bohrung (20) einerseits an ihrem den Lotösen (5) zugewandten Ende mittels eines mit dem Gehäuse verschweißten Deckels und andererseits an ihrem den Lotösen (5) abgewandten Ende durch einen Boden (17) dicht verschlossen ist, dadurch **gekennzeichnet,** daß der Boden (17), das Gehäuse (1) und zwei Stützwände (14) insgesamt einteilig ausgebildet sind, daß die Polschuhe (2) mit dem Permanentmagneten (3) zwischen den Stützwänden (14) angeordnet und mit dem Kunststoff des Gehäuses (1) umspritzt sind und daß die Polschuhe (2) im Boden (17) enden.

2. Induktivgeber nach Anspruch 1, dadurch **gekennzeichnet,** daß der Abstand der Polschuhenden von der Oberfläche des Bodens (17) mindestens 0,2 mm beträgt.

3. Induktivgeber nach Anspruch 1 oder 2, dadurch **gekennzeichnet,** daß das eine Auflagefläche (4) des Induktivgebers bildende Befestigungsteil (8) vom Gehäuse-Kunststoff teilweise umspritzt ist.

4. Induktivgeber nach einem der Ansprüche 1 bis 3, dadurch **gekennzeichnet,** daß zwischen der die Lotösen (5) tragenden Stirnseite des Spulenkörpers (6) und dem Deckel (16) eine Dämpfungs- bzw. Dichtmasse (15) angebracht ist.

5. Induktivgeber nach Anspruch 4, dadurch **gekennzeichnet,** daß die Dämpfungs- bzw. Dichtmasse (15) eine silikonhaltige Masse ist.

6. Induktivgeber nach einem der vorhergehenden Ansprüche, dadurch **gekennzeichnet,** daß die Lotösen (5) halbkreisförmig ausgebildet sind und rohrförmige Ansätze (12) aufweisen, die in entsprechende Ausnehmungen im Spulenkörper (6) eingepreßt sind.

7. Verfahren zur Herstellung eines Induktivgebers nach einem der Ansprüche 1 bis 6, **gekennzeichnet** durch die folgenden Schnitte a-k:

a) Anspritzen einer Kabeltülle (10) an das Kabel (9);

b) Anlöten der zwei formgleichen Kontaktfahnen (7) an die abisolierten Kabelenden;

c) Einlegen der so entstandenen ersten Baugruppe (A) zusammen mit den Polschuhen (2), dem Permanentmagneten (3) sowie dem Befestigungsteil (8) in ein Gehäuse-Spritzwerkzeug und deren Positionierung so, daß ein genauer Abstand der Polschuhe (2) zueinander und zur Auflagefläche (4) am Befestigungsteil (8) gewährleistet wird;

d) Abspritzen sämtlicher im Schnitt c) positionierten Teile (A,2,3,8) mit Kunststoff;

e) Spritzgießen des Spulenkörpers (6) in einem Spulenkörper-Spritzwerkzeug;

f) Aufwickeln der Spule (11) auf den Spulenkörper (6) und Verdrillen deren Enden;

g) Einpressen der Lotösen (5) in den Spulenkörper (6);

h) Verlöten der Spulenenden mit den Lotösen (5);

i) Einschieben der in den Schritten e) bis h) entstandenen zweiten Baugruppe (B) in die Bohrung (20) des Gehäuses (1);

j) Umbiegen der Kontaktfahnen (7) in Richtung der Lotösen (5); und Verlöten der beiden Teile;

k) Verschließen der Bohrung (20) durch den Deckel (16) und dessen Verschweißen mit dem Gehäuse (1).

8. Verfahren nach Anspruch 7, dadurch **gekennzeichnet,** daß vor dem Verschließen der Bohrung (20) auf die zweite Baugruppe (B) die Dämpfungs- bzw. Dichtmasse (15) angebracht wird.

## Claims

1. An induction generator, comprising an injection-moulded housing (1) of plastic material provided with a bore (20), two pole shoes (2) and a permanent magnet (3) arranged between these, the said pole shoes (2) and permanent magnet (3) being coated, by injection moulding, with plastics, as well as comprising a plastics bobbin (6) inserted into the bore (20) and having wound thereon a coil (11) which, through soldering eyelets (5), is connected to two contact tags (7) in communication with an externally guided cable (9), and comprising a mounting element (8), with the bore (20), on its end facing the soldering eyelets (5), being closely sealed by means of a lid welded to the housing, on the one hand, and on its end remote from the soldering eyelets (5) being closely sealed by means of a bottom (17), on the other hand,

**characterised** in that the bottom (17), the housing (1) and two supporting walls (14) on the whole are of one-part design, in that the pole shoes (2) along with the permanent magnet (3) are arranged between the supporting walls (14) and are spray-coated with the plastics of the housing (1), and in that the pole shoes (2) terminate into the bottom (17).

2. An induction generator as claimed in claim 1, **characterised** in that the spacing of the pole shoe ends from the surface of the bottom (17) amounts to at least 0.2 mms.

3. An induction generator as claimed in claim 1 or 2, **characterised** in that the mounting element (8) forming a mounting surface (4) of the induction generator, in part, is coated, by injection moulding, by the housing plastics.

4. An induction generator as claimed in any one of the claims 1 to 3, **characterised** in that a damping or sealing compound (15) is provided between the front side of the bobbin (6) carrying the soldering eyelets (5), and the lid (16).

5. An induction generator as claimed in claim 4, **characterised** in that the damping or sealing compound (15) is a silicone-containing composition.

6. An induction generator as claimed in any one of the preceding claims, **characterised** in that the soldering eyelets (5) are of semicircular design and include tubular lugs (12) which are pressed into corresponding recesses in the bobbin (6).

7. A method of manufaturing an induction generator as claimed in any one of the claims 1 to 6, **characterised** by the following steps a to k:

a) fitting a cable nozzle (10) on the cable (9) through injection moulding;

b) joining the two identically shaped contact tags (8) with the insulating cable ends by soldering;

c) placing the so formed first component unit (a) along with the pole shoes (2), the permanent magnet (3) and the mounting element (8) into a housing injection mould and positioning the same so as to ensure a precise spacing of the pole shoes (2) with respect to one another and to the mounting surface (4) on the mounting element (8);

d) spraying all the components (A, 2, 3, 8) positioned under paragraph c) with plastic material;

e) injection moulding of the bobbin (6) in a bobbin injection mould;

f) winding the coil (11) onto the bobbin (6) and twisting the ends thereof;

g) forcing the soldering eyelets (5) into the bobbin (6);

h) joining the coil ends by the soldering eyelets (5);

i) inserting the second component unit (B) formed according to the steps e) to h) into the bore (20) of the housing (1);

j) bending the contact tags (7) towards the soldering eyelets (5) and soldering the two parts;

k) closing the bore (20) by the lid (16) and welding the same to the housing (1).

8. A method as claimed in claim 7,
**characterised** in that the damping and sealing compound (15) is applied to the second component unit (B) prior to sealing the bore (20).

**Revendications**

1. Générateur inductif comprenant un boîtier (1), réalisé en matière plastique par le procédé de moulage par injection et comportant un alésage (20), deux pièces polaires (2) et un aimant permanent (3) disposé entre ces dernières, ces pièces polaires (2) et cet aimant permanent (3) étant enrobés, à l'injection, par la matière plastique, un corps de bobine (6) en matière plastique, placé dans l'alésage (20) et comportant, enroulée sur lui, une bobine (11) qui est raccordée par des cosses à souder (5) à deux pattes de contact (7) reliées à un câble (9) s'éloignant vers l'extérieur, et enfin une pièce de fixation (8), l'alésage (20) étant obturé de manière étanche, d'une part, à son extrémité tournée vers les cosses à souder (5), par un couvercle soudé sur le boîtier et, d'autre part, à son extrémité opposée à ces cosses à souder (5), par un fond (17), caractérisé en ce que le fond (17), le boîtier (1) et deux parois d'appui (14) sont réalisés ensemble en une seule pièce, en ce que les pièces polaires (2) sont disposées, avec l'aimant permanent (3), entre les parois d'appui (14) et sont enrobées, à l'injection, par la matière plastique du boîtier (1) et en ce que les pièces polaires (2) se terminent dans le fond (17).

2. Générateur inductif suivant la revendication 1, caractérisé en ce que l'espacement des extrémités des pièces polaires vis-à-vis de la surface du fond (17) est égale à au moins 0.2 mm.

3. Générateur inductif suivant l'une des revendications 1 et 2, caractérisé en ce que la pièce de fixation (8), constituant une surface d'appui (4) pour le générateur inductif, est partiellement enrobée, à l'injection, par la matière plastique du boîtier.

4. Générateur inductif suivant l'une des revendications 1 à 3, caractérisé en ce qu'une masse d'amortissement ou d'étanchéité (15) est disposée entre le couvercle (16) et la race frontale du corps de bobine (6) qui porte les cosses de soudage (5).

5. Générateur inductif suivant la revendication 4, caractérisé en ce que la masse d'amortissement ou d'étanchéité (15) est une masse contenant une silicone.

6. Générateur inductif suivant l'une des revendications précédentes, caractérisé en ce que les cosses de soudage (5) ont une forme semi-circulaire et comportent des prolongements tubulaires (12) qui sont emboîtés de force dans des cavités correspondantes ménagées dans le corps de bobine (6).

7. Procédé de fabrication d'un générateur inductif suivant l'une des revendications 1 à 6, caractérisé par les étapes suivantes a-k :

a) façonnage, par injection, d'un manchon de câble (10) sur le câble (9),

b) soudage des deux pattes de contact (7), de forme identique, sur les extrémités dénudées du câble,

c) mise en place du premier groupe structurel (A) ainsi formé, en même temps que les pièces polaires (2), l'aimant permanent (3) et la pièce de fixation (8), dans un moule de boîtier par injection, puis Positionnement de ce groupe structurel de façon à assurer un espacement précis des pièces polaires (2) l'une par rapport à l'autre et par rapport à la surface d'appui (4) prévue sur la pièce de fixation (8),

d) enrobage, par injection de matière plastique, de toutes les pièces (A, 2, 3, 8) positionnées à l'étape c),

e) moulage du corps de bobine (6) par injection dans un moule de corps de bobine,

f) enroulement de la bobine (11) sur le corps de bobine (6) et torsadage de ses extrémités,

g) emboîtement de force des cosses de soudage (5) dans le corps de bobine (6),

h) soudage des extrémités de la bobine sur les cosses de soudage (5),

i) introduction, dans l'alésage (20) du boîtier (1), du second groupe structurel (B) formé aux étapes e) à h),

j) pliage des pattes de contact (7) en direction des cosses de soudage (5) et soudage des unes sur les autres,

k) obturation de l'alésage (20) au moyen du couvercle (16) et soudage de ce dernier sur le boîtier (1).

8. Procédé suivant la revendication 7, caractérisé en ce qu'avant l'obturation de l'alésage (20), on met en place la masse d'amortissement ou d'étanchéité (15) par-dessus le second groupe structurel (B).

FIG.1

FIG.2

# FIG.3

e-h

a-b

c-d